# EUROPEAN PATENT APPLICATION

(11) **EP 4 852 506 A1**
(43) Date of publication of application: **09.12.2026**
(21) Application number: 24923360.2
(22) Date of filing: 09.10.2024
(51) Int. Cl.: H04W 24/10

(54) **REFERENCE SIGNAL PROCESSING METHOD, DEVICE, MEDIUM, AND PROGRAM PRODUCT**

(30) Priority: 06.02.2024 CN 202410174017
(71) Applicant: ZTE Corporation, Shenzhen, Guangdong 518057 (CN)
(72) Inventor: SI, Yuan, Shenzhen, Guangdong 518057 (CN); YU, Hongkang, Shenzhen, Guangdong 518057 (CN); CHEN, Yijian, Shenzhen, Guangdong 518057 (CN)
(74) Representative: Savi, Massimiliano
(86) International application number: PCT/CN2024/123703
(87) International publication number: WO 2025/167156

(57) **Abstract**

The present application provides a reference signal processing method, a device, a medium, and a program product. The method comprises: a terminal receives M reference signals sent by a network device; and determines M measurement results on the basis of the M reference signals and performs joint processing on the M measurement results to obtain N processing results for determining reporting information, and reports the reporting information to the network device.

## Description

### CROSS-REFERENCE TO RELATED APPLICATION

This application is filed based on and claims priority to Chinese Patent Application No. 202410174017.2, filed on February 6, 2024, the entire content of which is incorporated herein by reference.

### TECHNICAL FIELD

The present application relates to the technical field of communication devices, and in particular, to a reference signal processing method, a device, a medium, and a program product.

### BACKGROUND

With the rapid development of the field of communication technologies, communication frequency bands become higher, antenna array elements become more numerous, arrays become larger, beams become narrower, and the number of beams increases, so that the application prospect of beam training becomes increasingly broad. In future communication networks, the increase in the number of antennas will make it more difficult to acquire a full-dimensional channel, while acquiring beam information can achieve a high processing gain at a relatively small cost. After beam alignment is achieved through beam training, the quality and stability of signal transmission can be improved, and the network coverage and data transmission rate can be improved. Through beam training, the requirements and environmental conditions of different users (User Equipment, UE) can be better adapted to, thereby improving network performance.

In practical applications, beam training may adopt various algorithms and technologies, such as rule-based beamforming, iteration-based beamforming, and machine learning-based beamforming. At present, during beam training, a network-side device transmits reference signals to a user, and the user measures the reference signals and reports measurement results to a base station to help the base station perform beam selection. When receiving and measuring the reference signals, the user sometimes only measures the amplitude of the signals, and the related art only reports the measurement results without performing additional processing, so that the measurement processing efficiency and the anti-interference capability of the measurement results still need to be improved.

### SUMMARY

Embodiments of the present application provide a reference signal processing method, a device, a medium, and a program product, aiming to optimize resource configuration of beam training and improve the anti-interference capability of processing results.

In a first aspect of the present application, an embodiment provides a reference signal processing method, the method including:
receiving M reference signals sent by a network device, where M is an integer greater than 1;
determining M measurement results according to the M reference signals;
performing joint processing on the M measurement results to obtain N processing results, where N is an integer greater than 1; and
determining reporting information according to the N processing results, and reporting the reporting information to the network device.

In a second aspect of the present application, an embodiment provides a reference signal processing method, the method including:
sending M reference signals to a terminal, where M is an integer greater than 1; and
receiving reporting information sent by the terminal;
where the reporting information is obtained by the terminal based on the following steps: determining M measurement results according to the M reference signals; performing joint processing on the M measurement results to obtain N processing results; and determining the reporting information according to the N processing results, where N is an integer greater than 1.

In a third aspect of the present application, an embodiment provides an electronic device, including:
one or more processors; and
a memory, having one or more programs stored thereon, where the one or more programs, when executed by the one or more processors, cause the one or more processors to carry out:
   the reference signal processing method described in the first aspect;
      or,
   the reference signal processing method described in the second aspect.

In a fourth aspect of the present application, an embodiment provides a computer-readable storage medium, having a computer program stored thereon, where the program, when executed by a processor, causes the processor to carry out:
the reference signal processing method described in the first aspect;
   or,
the reference signal processing method described in the second aspect.

In a fifth aspect of the present application, an embodiment provides a computer program product, including a computer program, where the computer program, when executed by a processor, causes the processor to carry out:
the reference signal processing method described in the first aspect;
   or,
the reference signal processing method described in the second aspect.

In the embodiments of the present application, a terminal receives M reference signals sent by a network device; determines M measurement results according to the M reference signals; performs joint processing on the M measurement results to obtain N processing results; and determines reporting information according to the N processing results, and reports the reporting information to the network device. The network device sends the M reference signals to the terminal, and receives the reporting information sent by the terminal. The receiving and processing process includes two processes, namely reception measurement and joint processing. By combining the reception measurement, in which the user receives the received signals and acquires the measurement results, with the joint processing, in which the user jointly processes multiple measurement results, the received powers of multiple reference signals are jointly processed to acquire a processing gain, and at least one reference signal index is selected from the processing results and reported to the network device, so that the number of times of sending reference signals can be reduced, fast beam alignment can be achieved, the resource configuration of downlink beam training can be optimized, and the anti-interference capability of the processing results can be improved.

### BRIEF DESCRIPTION OF DRAWINGS

FIG. 1 is a schematic flowchart of a beam training process;
FIG. 2 is a schematic flowchart of a reference signal processing method provided by an embodiment of the present application;
FIG. 3 is a schematic diagram of interaction between a network device and a terminal provided by an embodiment of the present application;
FIG. 4 is a schematic flowchart of a specific process of step S103 in FIG. 2;
FIG. 5 is a schematic flowchart of a specific process of step S104 in FIG. 2;
FIG. 6 is a schematic flowchart of a specific process of a reference signal processing method provided by an embodiment of the present application;
FIG. 7 is a schematic flowchart of a specific process of another reference signal processing method provided by an embodiment of the present application;
FIG. 8 is a schematic flowchart of a specific process of another reference signal processing method provided by an embodiment of the present application;
FIG. 9 is a schematic flowchart of a specific process of another reference signal processing method provided by an embodiment of the present application;
FIG. 10 is a schematic flowchart of another reference signal processing method provided by an embodiment of the present application;
FIG. 11 is a schematic structural diagram of an electronic device provided by an embodiment of the present application

### DETAILED DESCRIPTION

In order to enable those skilled in the art to better understand the technical solutions of the present application, the technical solutions provided by the present application are described in detail below with reference to the accompanying drawings.

Example embodiments will be described more fully hereinafter with reference to the accompanying drawings, but the example embodiments described may be embodied in different forms and should not be construed as being limited to the embodiments set forth herein. Rather, these embodiments are provided so that the present application will be thorough and complete, and will enable those skilled in the art to fully understand the scope of the present application.

As used herein, the term "and/or" includes any and all combinations of one or more of the associated listed items.

The terminology used herein is for the purpose of describing particular embodiments only and is not intended to limit the present application. As used herein, the singular forms "a" and "the" are intended to include the plural forms as well, unless the context clearly indicates otherwise. It will be further understood that when the terms "include" and/or "made of" are used in this specification, they specify the presence of features, integers, steps, operations, elements, and/or components, but do not preclude the presence or addition of one or more other features, integers, steps, operations, elements, components, and/or groups thereof.

In the following description, reference is made to "some embodiments", which describe a subset of all possible embodiments, but it can be understood that "some embodiments" may be the same subset or different subsets of all possible embodiments, and may be combined with each other without conflict.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the related art and the present application, and will not be interpreted in an idealized or overly formal sense unless expressly so defined in the embodiments of the present application.

To facilitate a better understanding of the solutions of the embodiments of the present application, the related art is first introduced below.

A wireless communication system includes communication devices, and the communication devices can perform wireless communication with each other by using air interface resources. The communication devices include a network device and a terminal device, and the network device may also be referred to as a network-side device. Wireless communication between communication devices includes: wireless communication between a network device and a terminal device, and wireless communication between a network device and a network device. When communication devices perform wireless communication with each other by using air interface resources, a communication device that manages and/or allocates the air interface resources may also be referred to as a scheduling entity, and a communication device that is scheduled may also be referred to as a subordinate entity. Exemplarily, when a network device and a terminal device perform wireless communication, the network device may also be referred to as a scheduling entity, and the terminal device may also be referred to as a subordinate entity. The technical solutions provided by the embodiments of the present application can be used for wireless communication between a scheduling entity and a subordinate entity. The embodiments of the present application describe the technical solutions provided by the embodiments of the present application by taking wireless communication between a network device and a terminal device as an example. Further, in the technical solutions provided by the embodiments of the present application: a device that completes the functions of the network device may be a network device, or may be a device A that can be located in the network device and supports the network device in completing the functions, and the device A also falls within the protection scope of the present application; a device that completes the functions of the terminal device may be a terminal device, or may be a device B that can be located in the terminal device and supports the terminal device in completing the functions, and the device B also falls within the protection scope of the present application. In the embodiments of the present application, the term "wireless communication" may also be simply referred to as "communication", and the term "communication" may also be described as "data transmission".

The network device involved in the embodiments of the present application includes but is not limited to: an evolved Node B (eNB), a radio network controller (RNC), a Node B (NB), a base station controller (BSC), a base transceiver station (BTS), a home base station (for example, a home evolved NodeB, or a home Node B, HNB), a baseband unit (BBU), an access point (AP) in a wireless fidelity (WIFI) system, a wireless relay node, a wireless backhaul node, a transmission point (transmission and reception point, TRP, or transmission point, TP), and the like, and may also be a gNB in a 5G, such as NR, system, or a transmission point (TRP or TP), one antenna panel or one group (including multiple antenna panels) of antenna panels of a base station in a 5G system, or may also be a network node constituting a gNB or a transmission point, such as a baseband unit (BBU), or a distributed unit (DU), and the like.

The terminal device involved in the embodiments of the present application may also be referred to as a terminal, and is a device with a wireless transceiving function, which can be deployed on land, including indoors or outdoors, handheld or vehicle-mounted; can also be deployed on the water surface (such as a ship); and can also be deployed in the air (for example, on an aircraft, a balloon, a satellite, and the like). The terminal device may be user equipment (UE), where the UE includes a handheld device, a vehicle-mounted device, a wearable device, or a computing device with a wireless communication function. Exemplarily, the UE may be a mobile phone, a tablet computer, or a computer with a wireless transceiving function. The terminal device may also be a virtual reality (VR) terminal device, an augmented reality (AR) terminal device, a wireless terminal in industrial control, a wireless terminal in self-driving, a wireless terminal in telemedicine, a wireless terminal in a smart grid, a wireless terminal in a smart city, a wireless terminal in a smart home, and the like.

Both the network-side device and the terminal-side device adopt the beamforming technology, and the resulting transmitting and receiving beam management problem becomes a major problem. Beam management includes aspects such as beam training, beam measurement and reporting, and beam indication of each signal or channel. In the beam training process, the terminal-side device may need to measure and report reference signals (RS) configured by the network-side device. At present, the terminal-side device performs beam training based on a single beam measurement quantity (that is, layer 1 reference signal received power (L1-RSRP) (hereinafter referred to as RSRP)). Through the beam training process, the terminal-side device can find a beam pair for communicating with the network-side device. The relationship of the beam pair is represented by a QCL relationship. When the network-side device indicates that the QCL relationship is associated with a reference signal, the terminal-side device can know exactly which receiving beam to use to receive the reference signal, or which transmitting beam to use to send the reference signal, so that the behaviors of the network-side device and the terminal-side device can be aligned.

Beam training refers to adjusting, in the signal transmission process, beamforming weights sent by a network device, so that the beamforming weights can better adapt to the environment and conditions of a terminal, thereby improving the quality and stability of signal transmission. Specifically, beam training involves the following aspects:
Beam scanning: by scanning different beam directions, the optimal transmission direction is found, thereby improving the reception quality of signals;
Beamforming: according to feedback information of a receiving party and channel state information, the beamforming weights of a transmitting party are adjusted, so that the beamforming weights can better adapt to the environment and conditions of the receiving party;
Channel estimation: by estimating and measuring the state information of a channel, the propagation characteristics and interference conditions of the channel are understood, thereby providing a basis for downlink beam training.

Reference signals mainly include a cell-specific reference signal (C-RS), a UE-specific reference signal (UE-RS, also referred to as DM-RS), a Multicast Broadcast Single Frequency Network (MBSFN) reference signal, a positioning reference signal (P-RS), and the like. These reference signals are mainly used for channel estimation and coherent demodulation to help implement downlink beam training. Among them, the C-RS is used for channel estimation and coherent demodulation of all downlink transmission technologies except non-codebook-based beamforming technologies, and mainly corresponds to an antenna port at the base station side; the UE-RS (DM-RS) is dedicated to demodulation of data, and may only need to be transmitted, for a specific mobile station, in the resource blocks within the data block transmitted by it, without needing to be transmitted over the entire frequency band like the original cell-specific reference signal; the MBSFN reference signal is used for channel estimation and coherent demodulation of MBSFN; the P-RS is mainly used for positioning, but its specific positioning function and implementation are not yet clear. These reference signals play an important role in beam training. By receiving and processing these reference signals, channel state information can be acquired, and beamforming weights can then be adjusted, thereby implementing downlink beam training. In practical applications, according to different scenarios and requirements, an appropriate reference signal may be selected for beam training, so as to improve signal quality and network performance.

With the rapid development of the field of communication technologies, communication frequency bands become higher, antenna array elements become more numerous, arrays become larger, beams become narrower, and the number of beams increases, so that the application prospect of beam training becomes increasingly broad. In future communication networks, the increase in the number of antennas will make it more difficult to acquire a full-dimensional channel, while acquiring beam information can achieve a high processing gain at a relatively small cost. After beam alignment is achieved through beam training, the quality and stability of signal transmission can be improved, and the network coverage and data transmission rate can be improved. Through beam training, the requirements and environmental conditions of different users (User Equipment, UE) can be better adapted to, thereby improving network performance.

In practical applications, beam training may adopt various algorithms and technologies, such as rule-based beamforming, iteration-based beamforming, and machine learning-based beamforming. At present, during beam training, a network-side device transmits reference signals to a user, and the user measures the reference signals and reports measurement results to a base station to help the base station perform beam selection. When receiving and measuring the reference signals, the user sometimes only measures the amplitude of the signals, and the related art only reports the measurement results without performing additional processing, so that the measurement processing efficiency and the anti-interference capability of the measurement results still need to be improved.

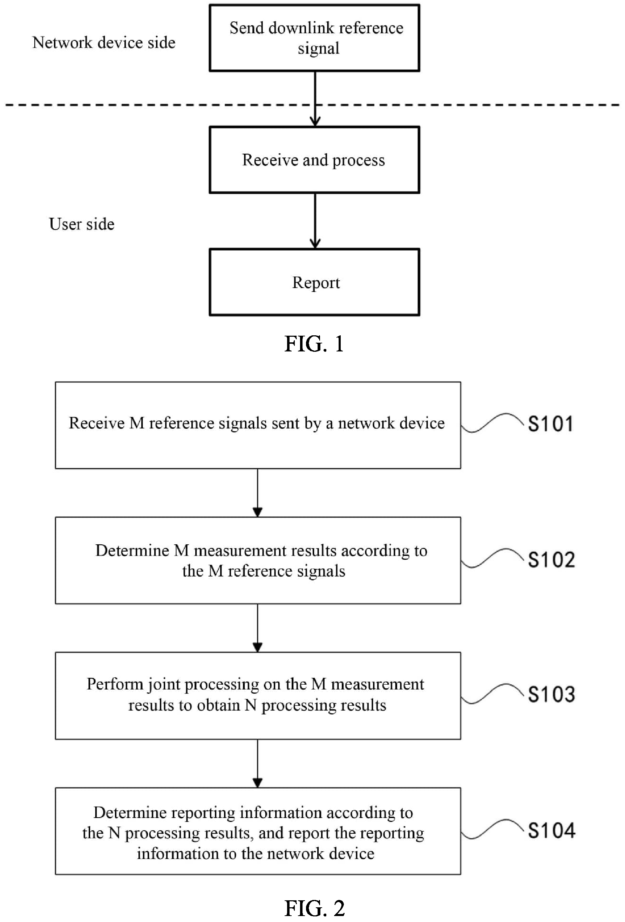

Referring to FIG. 1, which is a schematic flowchart of a beam training process, as shown in FIG. 1, in current downlink beam training, a network device transmits reference signals to the terminal user (User Equipment, UE) side, and the user measures reference signal received power (RSRP) and reports the strongest reference signal index to the network device to help the base station perform beam selection. When receiving downlink measurement reference signals, the user only measures the amplitude of the signals, and the related art only reports the measurement results without additional processing; therefore, the measurement processing efficiency and the anti-interference capability of the measurement results still need to be improved.

In order to optimize the resource configuration of beam training and improve the anti-interference capability of processing results, an embodiment of the present application proposes a reference signal processing method.

Referring to FIG. 2, which is a schematic flowchart of a reference signal processing method provided by an embodiment of the present application, the method can be applied to a terminal. As shown in FIG. 2, the reference signal processing method provided by the embodiment of the present application includes but is not limited to steps S101 to S104.

In step S101, M reference signals sent by a network device are received.

In step S102, M measurement results are determined according to the M reference signals.

In step S103, joint processing is performed on the M measurement results to obtain N processing results.

In step S104, reporting information is determined according to the N processing results, and the reporting information is reported to the network device.

It can be understood that receiving the M reference signals means that the network device has transmitted reference signals M times in total, and the terminal has correspondingly received the M reference signals.

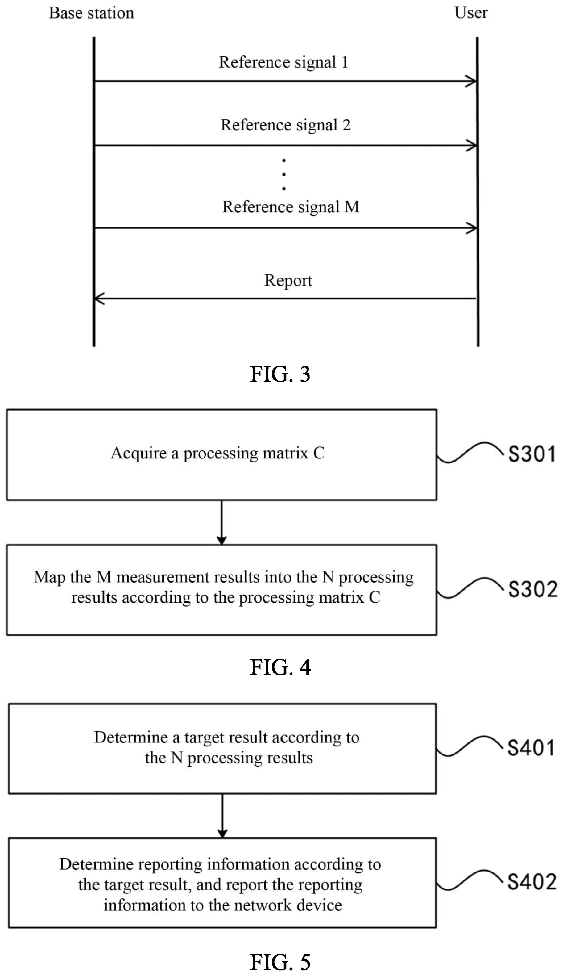

Referring to FIG. 3, which is a schematic diagram of interaction between a network device and a terminal provided by an embodiment of the present application, as shown in FIG. 3, in an embodiment of the present application, when performing downlink beam training, the network device transmits M reference signals to the user side, which are successively reference signal 1, reference signal 2, ..., reference signal M. After receiving the M reference signals transmitted by the network device, the user side performs result measurement and joint processing and then performs reporting, and reports the reporting result to the network device side.

It should be noted that M is an integer greater than 1, N is an integer greater than 1, and N is greater than M, or, N is less than M. When N is greater than M, only M measurements are performed, and N processing results can be acquired by using the joint processing of the M measurements, thereby reducing the number of measurements and optimizing the resource configuration of downlink beam training; when M is greater than N, the robustness of the measurement results is enhanced under poor channel conditions through multiple measurements and joint processing, thereby improving the anti-interference capability of the processing results.

After the terminal receives the M reference signals, the terminal determines M measurement results according to the M reference signals, that is, performs feature measurement on the M reference signals respectively to obtain M reference signal feature values. In some cases, the reception measurement process may be measurement of reference signal received power (RSRP), or, the reception measurement process may be measurement of reference signal received amplitude (Received Signal Strength Indicator, RSSI). In this way, feature measurement is performed on the M reference signals respectively to obtain M reference signal feature values, and the reference signal feature values include at least one of the RSRP measurement and the RSSI measurement.

Exemplarily, in an embodiment of the present application, yₘ represents the m-th reference signal received by the user, and ỹₘ represents the measurement result of the m-th reference signal. It is assumed that the network device has transmitted reference signals M times in total, m = 1,2,..., M; the user side has received the M reference signals y₁, y₂, ... , y_{M} transmitted by the network device, and the RSRP of the reference signals is measured. Through reception measurement, the user side can obtain the RSRP measurement results ỹ₁, ỹ₂,...,ỹ_{M} of the M reference signals, where ỹₘ = |yₘ|², m = 1,2,..., M, and |·| represents taking a modulus value.

Exemplarily, in another embodiment of the present application, yₘ represents the m-th reference signal received by the user, and ỹₘ represents the measurement result of the m-th reference signal. It is assumed that the network device has transmitted reference signals M times in total, m = 1,2,..., M; the user side has received the M reference signals y₁, y₂, ... , y_{M} transmitted by the network device, and the RSSI of the reference signals is measured. Through reception measurement, the user side can obtain the RSSI measurement results ỹ₁, ỹ₂,...,ỹ_{M} of the M reference signals, where ỹₘ = |yₘ|, m = 1,2,..., M, and |·| represents taking a modulus value.

In the embodiments of the present application, determining the M measurement results according to the M reference signals further includes: performing calculation on the M reference signals respectively according to a preset conversion function to obtain M reference signal conversion values.

Exemplarily, in an embodiment of the present application, ỹₘ represents the measurement result of the m-th reference signal. It is assumed that the network device has transmitted reference signals M times in total, m = 1,2,..., M; the measurement results of the reference signals can be calculated by using a preset conversion function in dB form, for example, ỹₘ = 10log₁₀|yₘ|², or, ỹₘ = 10log₁₀|yₘ|, and the measurement results of the M reference signals are calculated by the conversion function to obtain M reference signal conversion values.

It can be understood that after the reception measurement is completed, the terminal performs joint processing on the M measurement results. Referring to FIG. 4, which is a schematic flowchart of the specific process of step S103 in FIG. 2, as shown in FIG. 4, the specific process of step S103 in FIG. 2 provided by the embodiment of the present application includes but is not limited to steps S301 and S302.

In step S301, a processing matrix C is acquired.

In step S302, the M measurement results are mapped into N processing results according to the processing matrix C.

It should be noted that, in an embodiment of the present application, the joint processing may be linear, that is, the linear processing process may be represented by the processing matrix C, that is, the N processing results y̅ = [y̅₁, y̅₂, ... , y̅_{N}] = ỹC, where the matrix C is a matrix with a dimension of M*N, and can linearly map the M measurement results ỹ into the N processing results y̅: $C = \left[\begin{matrix}{c}_{1 , 1} & {c}_{1 , 2} & ⋯ & {c}_{1 , N} \\ {c}_{2 , 1} & {c}_{2 , 2} & ⋯ & {c}_{2 , N} \\ ⋮ & ⋮ & ⋱ & ⋮ \\ {c}_{M , 1} & {c}_{M , 2} & … & {c}_{M , N}\end{matrix}\right]$

Acquiring the processing matrix C includes but is not limited to the following manners:
acquiring, from each reference signal respectively, a sequence composed of N elements, and constructing the processing matrix C according to the sequences corresponding to the M reference signals;
   or,
acquiring a sequence index from each reference signal respectively, obtaining M sequences according to the sequence indexes corresponding to the M reference signals, where each sequence is composed of N elements, and constructing the processing matrix C according to the M sequences;
   or,
receiving downlink signaling sent by the network device, acquiring a matrix index from the downlink signaling, and obtaining the processing matrix C according to the matrix index;
   or,
receiving downlink signaling sent by the network device, where the downlink signaling carries a bitmap for indicating values of respective elements in the processing matrix C.

Exemplarily, in an embodiment of the present application, the network device may carry, in the reference signal sent in the m-th training, a sequence composed of the m-th row of the processing matrix C, that is, a sequence composed of N elements is acquired from the reference signal sent in the m-th training, and after the M trainings are completed, the terminal can acquire the processing matrix C, where m=1, 2, 3, ..., M.

Exemplarily, in another embodiment of the present application, the terminal presets L sequences c₁, c₂, ... , c_{L} of length N, and M sequences selected from the L sequences can form different processing matrices C. The network device carries the index information of the sequence, namely the sequence index, in the reference signal sent in each training. After acquiring the index information, the terminal can assemble, in sequential order, the sequences c corresponding to the index information acquired in the M trainings into the processing matrix C.

Exemplarily, in another embodiment of the present application, the terminal presets L processing matrices C₁, C₂, C₃, ... C_{L}, the network device informs the user of the index of the processing matrix used through downlink signaling, and the terminal obtains the processing matrix C according to the matrix index.

Exemplarily, in another embodiment of the present application, the network device directly notifies the terminal of each element in the processing matrix C through signaling. For example, when the processing matrix C only includes elements 0 and 1, the network device notifies the terminal of the matrix C by means of a bitmap.

It should be noted that, in the embodiments of the present application, each element in the processing matrix C may be a real number. In some cases, each element in the processing matrix C is 0 or 1. When the matrix C only includes elements 0 and 1, the network device notifies the terminal of the matrix C by means of a bitmap.

In addition, each element in the processing matrix C may also be 0 or e^{j θ}, where j is an imaginary unit, and θ is a variable with a value range of [0, 2 π], and in this case, the processing matrix is a complex matrix. In some cases, first values corresponding to respective rows in the processing matrix C are equal, where the first value represents a value obtained by adding the modulus values of all elements in the row; in some cases, second values corresponding to respective columns in the processing matrix C are equal, where the second value represents a value obtained by adding the modulus values of all elements in the column.

Referring to FIG. 5, which is a schematic flowchart of the specific process of step S104 in FIG. 2, as shown in FIG. 5, the specific process of step S104 in FIG. 2 provided by the embodiment of the present application includes but is not limited to steps S401 and S402.

In step S401, a target result is determined according to the N processing results.

In step S402, reporting information is determined according to the target result, and the reporting information is reported to the network device.

It should be noted that determining the target result according to the N processing results includes:
taking the K largest processing results among the N processing results as the target result, where K is an integer greater than or equal to 1, and K is less than or equal to N;
   or,
taking a modulus of each of the N processing results respectively to obtain N modulus values, and taking the K largest modulus values among the N modulus values as the target result, where K is an integer greater than or equal to 1, and K is less than or equal to N.

Exemplarily, after acquiring the N processing results y = [y̅₁, y̅₂, ... , y̅_{N}], the terminal performs selection on the N processing results, and selects the index(es) of one or more optimal processing results for reporting. Assuming that the reported parameter is index, when one optimal processing result is reported, the processing manner may be one of the following:
taking the largest processing result among the N processing results as the target result:
   $index = {max}_{i} {\overline{y}}_{i} , i = 1 , 2 , … , N$;
taking a modulus of each of the N processing results respectively to obtain N modulus values, and taking the largest modulus value among the N modulus values as the target result:
   $index = {max}_{i} \left|{\overline{y}}_{i}\right| , i = 1 , 2 , … , N$;

When multiple processing results are reported, the terminal may perform selection multiple times in the above manners on the premise of no repeated selection.

It should be noted that the reporting may be explicit or implicit. For example, the terminal may also report a quasi-colocation (Quasi-Colocation, QCL) relationship of the measurement reference signals. In this case, each processing result corresponds to one reference signal port, that is, there are N reference signal ports in total, and the corresponding reference signal may be a channel state information reference signal (CSI-RS) or a demodulation reference signal (DM-RS). Assuming that the index of the optimal processing result is index, when performing reporting, the terminal may only need to configure the reporting signal sent by itself to have a quasi-colocation relationship with the index-th reference signal.

For another example, the terminal may also report the time-frequency resource corresponding to the optimal processing result. In this case, each processing result corresponds to one time-frequency resource, and the terminal may only need to report the index of the time-frequency resource corresponding to the optimal processing result, while the mapping relationship between different processing results and time-frequency resources is informed to the terminal by the network device through downlink signaling, and the downlink signaling may be RRC signaling, a MAC-CE, or DCI.

The reporting signal may be an uplink signal carried on a physical uplink control channel (PUCCH) or a physical uplink shared channel (PUSCH).

After receiving the report from the terminal, the network device may determine, according to the reporting information of the terminal, a beamforming vector for downlink transmission and perform downlink signal sending.

Next, the reference signal processing method provided by the present application is described through specific embodiments.

### Embodiment 1:

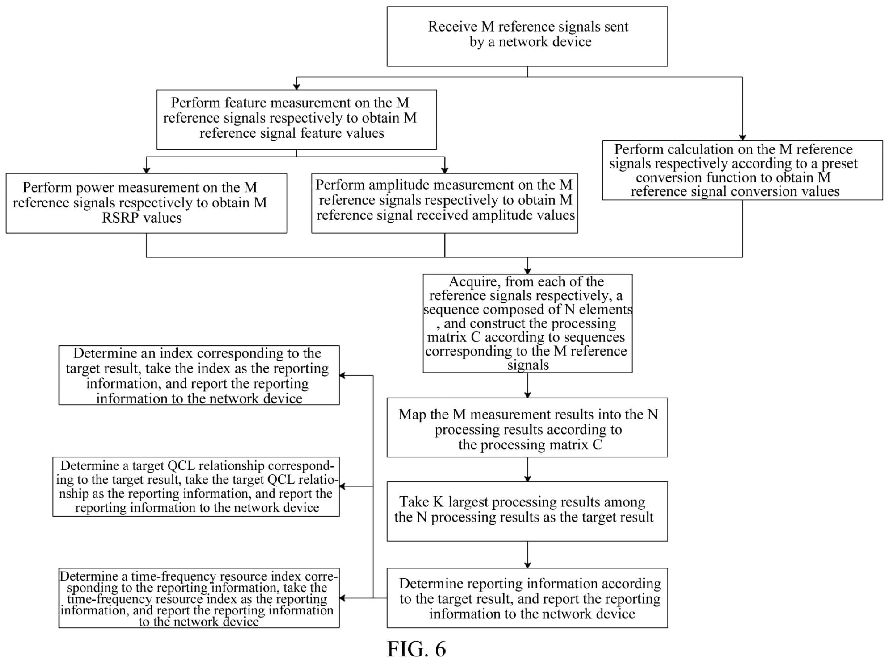

Referring to FIG. 6, which is a schematic flowchart of a specific process of a reference signal processing method provided by an embodiment of the present application, as shown in FIG. 6, after M reference signals sent by the network device are received;
feature measurement is performed on the M reference signals respectively to obtain M reference signal feature values: power measurement is performed on the M reference signals respectively to obtain M reference signal received power (RSRP) values; amplitude measurement is performed on the M reference signals respectively to obtain M reference signal received amplitude values;
calculation is performed on the M reference signals respectively according to a preset conversion function to obtain M reference signal conversion values;
a sequence index is acquired from each reference signal respectively, M sequences are obtained according to the sequence indexes corresponding to the M reference signals, where each sequence is composed of N elements, and the processing matrix C is constructed according to the M sequences;
the M measurement results are mapped into N processing results according to the processing matrix C;
the K largest processing results among the N processing results are taken as the target result, where K is an integer greater than or equal to 1, and K is less than or equal to N;
reporting information is determined according to the target result, and the reporting information is reported to the network device;
an index corresponding to the target result is determined, the index is taken as the reporting information, and the reporting information is reported to the network device,
   and/or,
a target quasi-colocation (QCL) relationship corresponding to the target result is determined, the target quasi-colocation (QCL) relationship is taken as the reporting information, and the reporting information is reported to the network device,
   and/or,
a time-frequency resource index corresponding to the reporting information is determined, the time-frequency resource index is taken as the reporting information, and the reporting information is reported to the network device.

### Embodiment 2:

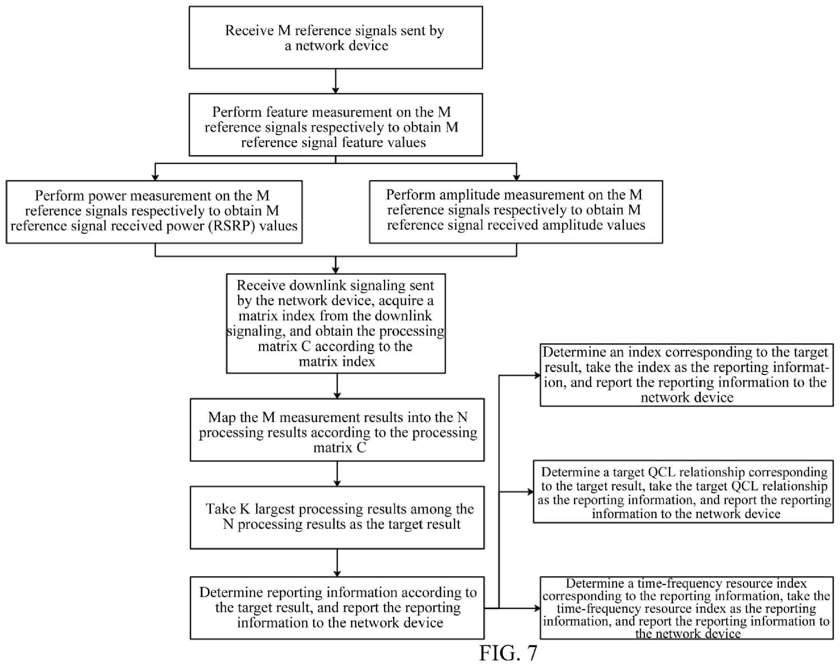

Referring to FIG. 7, which is a schematic flowchart of a specific process of a reference signal processing method provided by an embodiment of the present application, as shown in FIG. 7, after M reference signals sent by the network device are received;
feature measurement is performed on the M reference signals respectively to obtain M reference signal feature values: power measurement is performed on the M reference signals respectively to obtain M reference signal received power (RSRP) values; amplitude measurement is performed on the M reference signals respectively to obtain M reference signal received amplitude values;
downlink signaling sent by the network device is received, a matrix index is acquired from the downlink signaling, and the processing matrix C is obtained according to the matrix index;
the M measurement results are mapped into N processing results according to the processing matrix C;
the K largest processing results among the N processing results are taken as the target result, where K is an integer greater than or equal to 1, and K is less than or equal to N;
reporting information is determined according to the target result, and the reporting information is reported to the network device;
an index corresponding to the target result is determined, the index is taken as the reporting information, and the reporting information is reported to the network device,
   and/or,
a target quasi-colocation (QCL) relationship corresponding to the target result is determined, the target quasi-colocation (QCL) relationship is taken as the reporting information, and the reporting information is reported to the network device,
   and/or,
a time-frequency resource index corresponding to the reporting information is determined, the time-frequency resource index is taken as the reporting information, and the reporting information is reported to the network device.

### Embodiment 3:

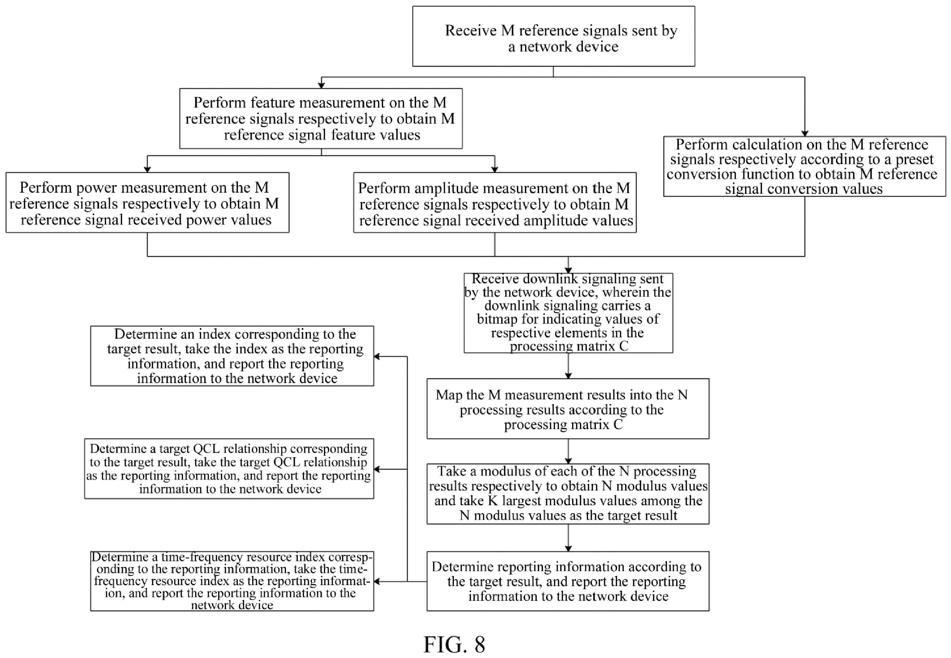

Referring to FIG. 8, which is a schematic flowchart of a specific process of a reference signal processing method provided by an embodiment of the present application, as shown in FIG. 8, after M reference signals sent by the network device are received;
feature measurement is performed on the M reference signals respectively to obtain M reference signal feature values: power measurement is performed on the M reference signals respectively to obtain M reference signal received power (RSRP) values; amplitude measurement is performed on the M reference signals respectively to obtain M reference signal received amplitude values;
calculation is performed on the M reference signals respectively according to a preset conversion function to obtain M reference signal conversion values;
downlink signaling sent by the network device is received, where the downlink signaling carries a bitmap for indicating values of respective elements in the processing matrix C;
the M measurement results are mapped into N processing results according to the processing matrix C;
a modulus of each of the N processing results is taken respectively to obtain N modulus values, and the K largest modulus values among the N modulus values are taken as the target result;
reporting information is determined according to the target result, and the reporting information is reported to the network device;
an index corresponding to the target result is determined, the index is taken as the reporting information, and the reporting information is reported to the network device,
   and/or,
a target quasi-colocation (QCL) relationship corresponding to the target result is determined, the target quasi-colocation (QCL) relationship is taken as the reporting information, and the reporting information is reported to the network device,
   and/or,
a time-frequency resource index corresponding to the reporting information is determined, the time-frequency resource index is taken as the reporting information, and the reporting information is reported to the network device.

### Embodiment 4:

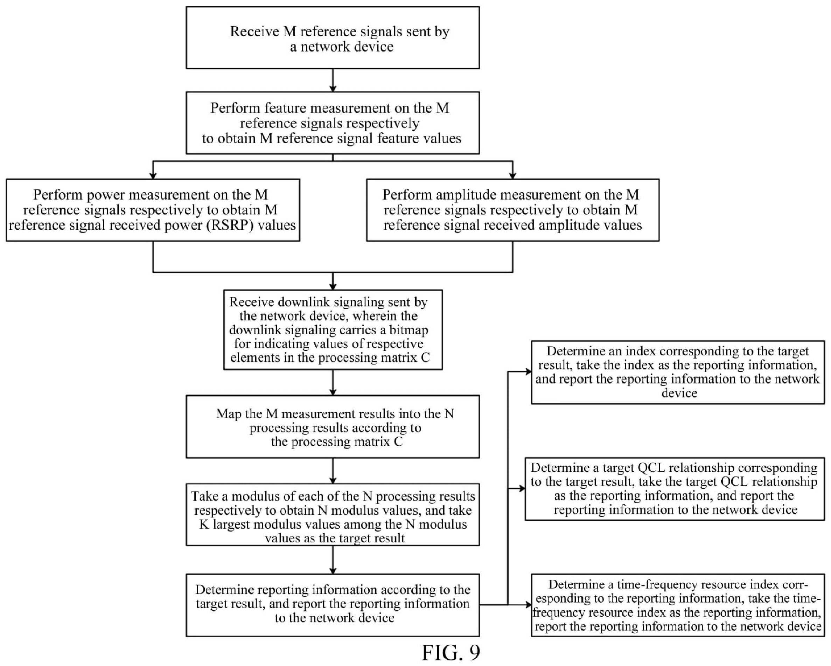

Referring to FIG. 9, which is a schematic flowchart of a specific process of a reference signal processing method provided by an embodiment of the present application, as shown in FIG. 9, after M reference signals sent by the network device are received;
after M reference signals sent by the network device are received;
feature measurement is performed on the M reference signals respectively to obtain M reference signal feature values: power measurement is performed on the M reference signals respectively to obtain M reference signal received power (RSRP) values; amplitude measurement is performed on the M reference signals respectively to obtain M reference signal received amplitude values;
downlink signaling sent by the network device is received, where the downlink signaling carries a bitmap for indicating values of respective elements in the processing matrix C;
a modulus of each of the N processing results is taken respectively to obtain N modulus values, and the K largest modulus values among the N modulus values are taken as the target result;
the K largest processing results among the N processing results are taken as the target result, where K is an integer greater than or equal to 1, and K is less than or equal to N;
reporting information is determined according to the target result, and the reporting information is reported to the network device;
an index corresponding to the target result is determined, the index is taken as the reporting information, and the reporting information is reported to the network device,
   and/or,
a target quasi-colocation (QCL) relationship corresponding to the target result is determined, the target quasi-colocation (QCL) relationship is taken as the reporting information, and the reporting information is reported to the network device,
   and/or,
a time-frequency resource index corresponding to the reporting information is determined, the time-frequency resource index is taken as the reporting information, and the reporting information is reported to the network device.
feature measurement is performed on the M reference signals respectively to obtain M reference signal feature values: power measurement is performed on the M reference signals respectively to obtain M reference signal received power (RSRP) values; amplitude measurement is performed on the M reference signals respectively to obtain M reference signal received amplitude values;
calculation is performed on the M reference signals respectively according to a preset conversion function to obtain M reference signal conversion values;
a sequence index is acquired from each reference signal respectively, M sequences are obtained according to the sequence indexes corresponding to the M reference signals, where each sequence is composed of N elements, and the processing matrix C is constructed according to the M sequences;
the M measurement results are mapped into N processing results according to the processing matrix C;
a modulus of each of the N processing results is taken respectively to obtain N modulus values, and the K largest modulus values among the N modulus values are taken as the target result;
reporting information is determined according to the target result, and the reporting information is reported to the network device;
an index corresponding to the target result is determined, the index is taken as the reporting information, and the reporting information is reported to the network device,
   and/or,
a target quasi-colocation (QCL) relationship corresponding to the target result is determined, the target quasi-colocation (QCL) relationship is taken as the reporting information, and the reporting information is reported to the network device,
   and/or,
a time-frequency resource index corresponding to the reporting information is determined, the time-frequency resource index is taken as the reporting information, and the reporting information is reported to the network device.

Specifically, in an embodiment of the present application, it is assumed that a network device and a terminal perform downlink beam training, the network device side includes N antennas, and the terminal has a single antenna, and the purpose of performing beam training is to select the optimal one or more beams from a beam set B for the sending of downlink data. It is assumed that the network device and the terminal perform beam training M times in total (that is, the network device sends downlink reference signals M times), and the beam set B contains N beamforming vectors bᵢ in total that may need to be trained, that is, B = [b₁, b₂, ... , b_{N}]^{T}; for a transmitting array with N antennas, the beamforming vector bᵢ is an N* 1 vector. In order to achieve better beam training performance, a weighted combination of multiple beams bᵢ is sent in each training. Let a_{i,j} represent the weighting coefficient of the i-th beam when the downlink reference signal is sent for the j-th time; then ${F}_{j} = {\sum }_{i = 1}^{N} {a}_{i , j} {b}_{i}$ represents the beamforming weight when the downlink reference signal is sent for the j-th time, and the expression of the received signal yₘ at the terminal side when the base station sends the reference signal for the m-th time is: ${y}_{m} = {HF}_{i} + {n}_{m} ;$ where H is a downlink channel with a dimension of 1*N, and nₘ represents the Gaussian noise of the m-th training. After acquiring the received signal yₘ, the terminal performs reception measurement to acquire the measurement result ỹₘ, and the measurement result may be any one of those described in the foregoing measurement process. After acquiring the measurement results ỹ = [ỹ₁, ỹ₂, ... , ỹ_{M}] of the M times, the terminal side performs joint processing on the measurement results by using the processing matrix C to obtain an N-dimensional processing result y̅, and the expression of y̅ is: $\overline{y} = \left[{\overline{y}}_{1},{\overline{y}}_{2},…,{\overline{y}}_{N}\right] = {y}^{˜} C ;$ where the above processing matrix C is informed to the terminal by the base station. The processing matrix C has the following meaning:

The beamforming weights a_{i,j}, with i as the row index and j as the column index, form an N*M beamforming weight matrix A, as shown below: $A = \left[\begin{matrix}{a}_{1 , 1} & {a}_{1 , 2} & ⋯ & {a}_{1 , M} \\ {a}_{2 , 1} & {a}_{2 , 2} & … & {a}_{2 , M} \\ ⋮ & ⋮ & ⋱ & ⋮ \\ {a}_{N , 1} & {a}_{N , 2} & … & {a}_{N , M}\end{matrix}\right] ;$

Then, the processing matrix C is obtained by performing a linear transformation on the beamforming weights A, for example: $C = {A}^{H} ;$ $C = {A}^{H} {\left({A}^{H}A\right)}^{- 1} ;$ $C = {A}^{H} {\left({AA}^{H}+{σ}^{2}I\right)}^{- 1} ;$

It should be noted that, in the above formulas, (·)^{H} represents the conjugate transpose of a matrix, I represents an N-order identity matrix, and σ is a real number. The meaning of the above processing process is that the beamforming process of the base station (that is, the beamforming weight matrix A) is transparent to the terminal; when the base station adopts different beamforming manners, it may only need to inform the terminal of how to perform reception processing, that is, it may only need to inform the terminal of the processing matrix C corresponding to the beamforming manner or the calculation method of the processing matrix C.

After obtaining the processing result y̅, the terminal performs selection on the N processing results, and selects, from the set y̅, the index(es) of one or more strongest processing results for reporting. When one is selected, the selected index is acquired by using the following method: $index = {max}_{i} {\overline{y}}_{i} , i = 1 , 2 , … , N ;$

When multiple are selected, the terminal, after selecting y̅ᵢ, removes y̅ᵢ from the set y̅, and repeats the above process until the quantity is sufficient.

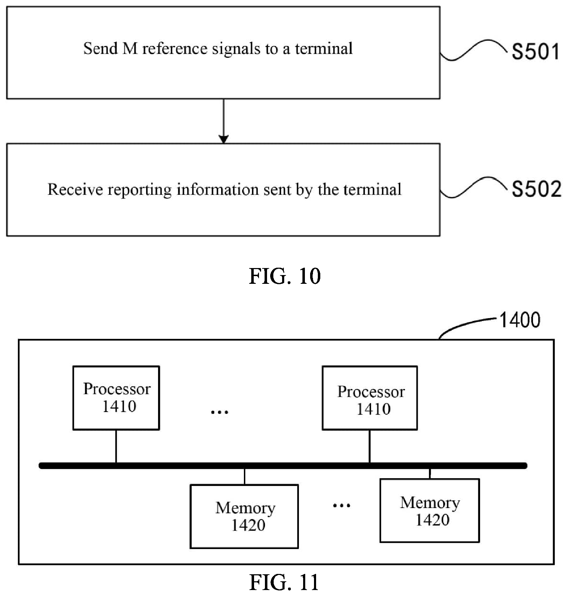

Referring to FIG. 10, which is a schematic flowchart of another reference signal processing method provided by an embodiment of the present application, the method can be applied to a network device. As shown in FIG. 10, the another reference signal processing method provided by the embodiment of the present application includes but is not limited to the following steps.

In step S501, M reference signals are sent to a terminal.

In step S502, reporting information sent by the terminal is received.

The reporting information is obtained by the terminal based on the following steps: determining M measurement results according to the M reference signals; performing joint processing on the M measurement results to obtain N processing results; and determining the reporting information according to the N processing results, where N is an integer greater than 1.

It should be noted that after the reporting information sent by the terminal is received, the following steps may further need to be performed.

In step S503, a target beam is determined according to the reporting information.

In step S504, a downlink signal is sent to the terminal by using the target beam.

The N processing results are determined according to the M measurement results and a processing matrix C, and the processing matrix C is a matrix with a dimension of M*N.

Each reference signal carries a sequence composed of N elements, and the sequence is used for constructing the processing matrix C;
or,
each reference signal carries a sequence index, the sequence index is used for determining a corresponding sequence, and the sequence is used for constructing the processing matrix C.

It can be understood that, in the embodiments of the present application, the reference signal processing method further includes:
sending downlink signaling to the terminal, where the downlink signaling carries a matrix index, and the matrix index is used for determining the processing matrix C;
   or,
sending downlink signaling to the terminal, where the downlink signaling carries a bitmap for indicating values of respective elements in the processing matrix C.

An embodiment of the present application further provides an electronic device. As shown in FIG. 11, the electronic device 1400 includes:
one or more processors 1410; and
a memory 1420, having one or more programs stored thereon, where the one or more programs, when executed by the one or more processors 1410, cause the one or more processors 1410 to carry out the reference signal processing method applied to a terminal, or, the reference signal processing method applied to a network device, provided by the embodiments of the present application.

Exemplarily, the reference signal processing method applied to a terminal includes:
receiving M reference signals sent by a network device, where M is an integer greater than 1;
determining M measurement results according to the M reference signals;
performing joint processing on the M measurement results to obtain N processing results, where N is an integer greater than 1; and
determining reporting information according to the N processing results, and reporting the reporting information to the network device.

Exemplarily, the reference signal processing method applied to a network device includes:
sending M reference signals to a terminal, where M is an integer greater than 1; and
receiving reporting information sent by the terminal;
where the reporting information is obtained by the terminal based on the following steps: determining M measurement results according to the M reference signals; performing joint processing on the M measurement results to obtain N processing results; and determining the reporting information according to the N processing results, where N is an integer greater than 1.

The memory 1420, as a non-transitory network system, can be used to store non-transitory software programs and non-transitory computer-executable programs. In addition, the memory 1420 may include a high-speed random access memory, and may further include a non-transitory memory, such as at least one magnetic disk storage device, a flash memory device, or another non-transitory solid-state storage device. In some implementations, the memory 1420 optionally includes memories 1420 disposed remotely relative to the processor 1410, and these remote memories 1420 may be connected to the processor 1410 through a network. Examples of the above network include but are not limited to the Internet, an intranet, a local area network, a mobile communication network, and combinations thereof.

The memory 1420 may be implemented in the form of a read-only memory (ROM), a static storage device, a dynamic storage device, or a random access memory (RAM). The memory 1420 may store an operating system and other application programs. When the technical solutions provided by the embodiments of this specification are implemented by software or firmware, related program codes are stored in the memory 1420, and are called by the processor 1410 to execute the methods of the embodiments of the present application.

The processor 1410 may be implemented by a general-purpose CPU (Central Processing Unit), a microprocessor, an application-specific integrated circuit (ASIC), or one or more integrated circuits, and is configured to execute related programs to implement the technical solutions provided by the embodiments of the present application.

In some embodiments, the electronic device further includes:
an input/output interface, configured to implement information input and output;
a communication interface, configured to implement communication interaction between this device and other devices, where the communication may be implemented in a wired manner (for example, USB, a network cable, and the like), or may be implemented in a wireless manner (for example, a mobile network, WIFI, Bluetooth, and the like); and
a bus, which transmits information between various components of the device (for example, the processor 1410, the memory 1420, the input/output interface, and the communication interface);
where the processor 1410, the memory 1420, the input/output interface, and the communication interface implement communication connections with each other inside the device through the bus.

An embodiment of the present application further provides a computer-readable storage medium storing computer-executable instructions, where the computer-executable instructions are used for executing and implementing the reference signal processing method applied to a terminal, or, the reference signal processing method applied to a network device, provided by the embodiments of the present application.

Exemplarily, the reference signal processing method applied to a terminal includes:
receiving M reference signals sent by a network device, where M is an integer greater than 1;
determining M measurement results according to the M reference signals;
performing joint processing on the M measurement results to obtain N processing results, where N is an integer greater than 1; and
determining reporting information according to the N processing results, and reporting the reporting information to the network device.

Exemplarily, the reference signal processing method applied to a network device includes:
sending M reference signals to a terminal, where M is an integer greater than 1; and
receiving reporting information sent by the terminal;
where the reporting information is obtained by the terminal based on the following steps: determining M measurement results according to the M reference signals; performing joint processing on the M measurement results to obtain N processing results; and determining the reporting information according to the N processing results, where N is an integer greater than 1.

An embodiment of the present application further provides a computer program product, including a computer program or computer instructions, where the computer program or the computer instructions are stored in a computer-readable storage medium, a processor of a computer device reads the computer program or the computer instructions from the computer-readable storage medium, and the processor executes the computer program or the computer instructions, so that the computer device executes and implements the reference signal processing method applied to a terminal, or, the reference signal processing method applied to a network device, provided by the embodiments of the present application.

Exemplarily, the reference signal processing method applied to a terminal includes:
receiving M reference signals sent by a network device, where M is an integer greater than 1;
determining M measurement results according to the M reference signals;
performing joint processing on the M measurement results to obtain N processing results, where N is an integer greater than 1; and
determining reporting information according to the N processing results, and reporting the reporting information to the network device.

Exemplarily, the reference signal processing method applied to a network device includes:
sending M reference signals to a terminal, where M is an integer greater than 1; and
receiving reporting information sent by the terminal;
where the reporting information is obtained by the terminal based on the following steps: determining M measurement results according to the M reference signals; performing joint processing on the M measurement results to obtain N processing results; and determining the reporting information according to the N processing results, where N is an integer greater than 1.

The system architectures and application scenarios described in the embodiments of the present application are intended to more clearly illustrate the technical solutions of the embodiments of the present application, and do not constitute a limitation on the technical solutions provided by the embodiments of the present application. Those skilled in the art can know that, with the evolution of system architectures and the emergence of new application scenarios, the technical solutions provided by the embodiments of the present application are also applicable to similar technical problems.

Those of ordinary skill in the art can understand that all or part of the processes in the methods of the above embodiments can be implemented by a computer program instructing related hardware; the computer program can be stored in a non-volatile computer-readable storage medium, and when executed, the computer program can include the processes of the embodiments of the above methods. Any reference to a memory, storage, database, or other medium used in the embodiments provided in the present application may include non-volatile and/or volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache memory. By way of illustration and not limitation, RAM is available in various forms, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM), a rambus direct RAM (RDRAM), a direct rambus dynamic RAM (DRDRAM), and a rambus dynamic RAM (RDRAM).

Those of ordinary skill in the art can understand that all or some of the steps and systems in the methods disclosed above can be implemented as software, firmware, hardware, and appropriate combinations thereof. Some physical components or all physical components can be implemented as software executed by a processor, such as a central processing unit, a digital signal processor, or a microprocessor, or implemented as hardware, or implemented as an integrated circuit, such as an application-specific integrated circuit. Such software can be distributed on a computer-readable medium, and the computer-readable medium can include a computer storage medium (or a non-transitory medium) and a communication medium (or a transitory medium). As is well known to those of ordinary skill in the art, the term computer storage medium includes volatile and non-volatile, removable and non-removable media implemented in any method or technology for storing information (such as computer-readable instructions, data structures, program modules, or other data). A computer storage medium includes but is not limited to a RAM, a ROM, an EEPROM, a flash memory or other memory technology, a CD-ROM, a digital versatile disc (DVD) or other optical disc storage, a magnetic cassette, a magnetic tape, magnetic disk storage or other magnetic storage devices, or any other medium that can be used to store desired information and that can be accessed by a computer. In addition, as is well known to those of ordinary skill in the art, a communication medium typically contains computer-readable instructions, data structures, program modules, or other data in a modulated data signal such as a carrier wave or other transmission mechanism, and may include any information delivery medium.

It should be understood that, in the present application, "at least one (item)" refers to one or more, and "multiple" refers to two or more. "And/or" is used to describe an association relationship of associated objects, and indicates that three relationships may exist; for example, "A and/or B" may indicate three cases: only A exists, only B exists, and both A and B exist, where A and B may be singular or plural. The character "/" generally indicates that the associated objects before and after it are in an "or" relationship. "At least one of the following (items)" or similar expressions thereof refer to any combination of these items, including any combination of a single item (items) or plural items (items). For example, at least one (item) of a, b, or c may indicate: a, b, c, "a and b", "a and c", "b and c", or "a and b and c", where a, b, and c may be single or multiple.

Some embodiments of the present application have been described above with reference to the accompanying drawings, and the scope of rights of the present application is not thereby limited. Any modifications, equivalent replacements, and improvements made by those skilled in the art without departing from the scope and essence of the present application shall fall within the scope of rights of the present application.

## Claims

1. A reference signal processing method, comprising:
receiving M reference signals sent by a network device, wherein M is an integer greater than 1;
determining M measurement results according to the M reference signals;
performing joint processing on the M measurement results to obtain N processing results, wherein N is an integer greater than 1; and
determining reporting information according to the N processing results, and reporting the reporting information to the network device.

2. The reference signal processing method according to claim 1, wherein the determining M measurement results according to the M reference signals comprises:
performing feature measurement on the M reference signals respectively to obtain M reference signal feature values.

3. The reference signal processing method according to claim 2, wherein the performing feature measurement on the M reference signals respectively to obtain M reference signal feature values comprises at least one of the following:
performing power measurement on the M reference signals respectively to obtain M reference signal received power (RSRP) values; or
performing amplitude measurement on the M reference signals respectively to obtain M reference signal received amplitude values.

4. The reference signal processing method according to claim 1, wherein the determining M measurement results according to the M reference signals comprises:
performing calculation on the M reference signals respectively according to a preset conversion function to obtain M reference signal conversion values.

5. The reference signal processing method according to claim 1, wherein the performing joint processing on the M measurement results to obtain N processing results comprises:
acquiring a processing matrix C, wherein the processing matrix C is a matrix with a dimension of M*N; and
mapping the M measurement results into the N processing results according to the processing matrix C.

6. The reference signal processing method according to claim 5, wherein the acquiring the processing matrix C comprises:
acquiring, from each of the reference signals respectively, a sequence composed of N elements, and constructing the processing matrix C according to sequences corresponding to the M reference signals;
or,
acquiring a sequence index from each of the reference signals respectively, obtaining M sequences according to sequence indexes corresponding to the M reference signals, wherein each of the sequences is composed of N elements, and constructing the processing matrix C according to the M sequences;
or,
receiving downlink signaling sent by the network device, acquiring a matrix index from the downlink signaling, and obtaining the processing matrix C according to the matrix index;
or,
receiving downlink signaling sent by the network device, wherein the downlink signaling carries a bitmap for indicating values of respective elements in the processing matrix C.

7. The reference signal processing method according to claim 5, wherein each element in the processing matrix C is a real number.

8. The reference signal processing method according to claim 5, wherein each element in the processing matrix C is 0 or 1.

9. The reference signal processing method according to claim 5, wherein each element in the processing matrix C is 0 or e^{jθ}, wherein j is an imaginary unit, and θ is a variable with a value range of [0, 2π].

10. The reference signal processing method according to claim 5, wherein first values corresponding to respective rows in the processing matrix C are equal, wherein the first value represents a value obtained by adding modulus values of all elements in the row.

11. The reference signal processing method according to claim 5, wherein second values corresponding to respective columns in the processing matrix C are equal, wherein the second value represents a value obtained by adding modulus values of all elements in the column.

12. The reference signal processing method according to claim 1, wherein the N is greater than the M, or, the N is less than the M.

13. The reference signal processing method according to claim 1, wherein the determining reporting information according to the N processing results, and reporting the reporting information to the network device comprises:
determining a target result according to the N processing results; and
determining the reporting information according to the target result, and reporting the reporting information to the network device.

14. The reference signal processing method according to claim 13, wherein determining the target result according to the N processing results comprises:
taking K largest processing results among the N processing results as the target result, wherein K is an integer greater than or equal to 1, and K is less than or equal to N;
or,
taking a modulus of each of the N processing results respectively to obtain N modulus values, and taking K largest modulus values among the N modulus values as the target result, wherein K is an integer greater than or equal to 1, and K is less than or equal to N.

15. The reference signal processing method according to claim 14, wherein the determining the reporting information according to the target result, and reporting the reporting information to the network device comprises one of the following:
determining an index corresponding to the target result, taking the index as the reporting information, and reporting the reporting information to the network device;
determining a target quasi-colocation (QCL) relationship corresponding to the target result, taking the target quasi-colocation (QCL) relationship as the reporting information, and reporting the reporting information to the network device; or
determining a time-frequency resource index corresponding to the reporting information, taking the time-frequency resource index as the reporting information, and reporting the reporting information to the network device.

16. A reference signal processing method, comprising:
sending M reference signals to a terminal, wherein M is an integer greater than 1; and
receiving reporting information sent by the terminal;
wherein the reporting information is obtained by the terminal based on the following steps: determining M measurement results according to the M reference signals; performing joint processing on the M measurement results to obtain N processing results; and determining the reporting information according to the N processing results, wherein N is an integer greater than 1.

17. The method according to claim 16, wherein after the receiving reporting information sent by the terminal, the method further comprises:
determining a target beam according to the reporting information; and
sending a downlink signal to the terminal by using the target beam.

18. The method according to claim 16, wherein the N processing results are determined according to the M measurement results and a processing matrix C, and the processing matrix C is a matrix with a dimension of M*N.

19. The method according to claim 18, wherein each of the reference signals carries a sequence composed of N elements, and the sequence is used for constructing the processing matrix C;
or,
each of the reference signals carries a sequence index, the sequence index is used for determining a corresponding sequence, and the sequence is used for constructing the processing matrix C.

20. The method according to claim 18, wherein the method further comprises:
sending downlink signaling to the terminal, wherein the downlink signaling carries a matrix index, and the matrix index is used for determining the processing matrix C;
or,
sending downlink signaling to the terminal, wherein the downlink signaling carries a bitmap for indicating values of respective elements in the processing matrix C.

21. An electronic device, comprising:
one or more processors; and
a memory, having one or more computer programs stored thereon, wherein the one or more computer programs, when executed by the one or more processors, cause the one or more processors to carry out:
the reference signal processing method according to any one of claims 1 to 15;
or,
the reference signal processing method according to any one of claims 16 to 20.

22. A computer-readable storage medium, storing a computer program, wherein the computer program, when executed by a processor, causes the processor to carry out:
the reference signal processing method according to any one of claims 1 to 15;
or,
the reference signal processing method according to any one of claims 16 to 20.

23. A computer program product, comprising a computer program, wherein the computer program, when executed by a processor, causes the processor to carry out:
the reference signal processing method according to any one of claims 1 to 15;
or,
the reference signal processing method according to any one of claims 16 to 20.
